# EUROPÄISCHE PATENTSCHRIFT

(11) **EP 3 310 740 B1**
(45) Veröffentlichungstag und Bekanntmachung des Hinweises auf die Patenterteilung: **05.08.2020**
(21) Anmeldenummer: 16731563.9
(22) Anmeldetag: 16.06.2016
(51) Int. Cl.: C04B 35/115

(54) **TRANSPARENTE KERAMIK ALS KOMPONENTE FÜR BRUCHFESTE OPTIKEN**
TRANSPARENT CERAMIC MATERIAL AS COMPONENT FOR A UNBREAKABLE LENSES
CÉRAMIQUE TRANSPARENTE EN TANT QUE CONSTITUANT POUR DES ÉLÉMENTS OPTIQUES INCASSABLES

(30) Priorität: 16.06.2015 DE 102015211040
(43) Veröffentlichungstag der Anmeldung: 25.04.2018
(73) Patentinhaber: CeramTec-Etec GmbH, 53797 Lohmar (DE)
(72) Erfinder: SCHNETTER, Lars, 53518 Wimbach (DE); SCHREINER, Tino, 56305 Puderbach (DE); WAIDHAS, Jürgen, 95666 Mitterteich (DE)
(74) Vertreter: Fehrenbacher, Eckhard Anton
(86) Internationale Anmeldenummer: PCT/EP2016/063946
(87) Internationale Veröffentlichungsnummer: WO 2016/202951

(56) Entgegenhaltungen:
- EP-A1- 0 657 399
- WO-A1-2004/007397
- WO-A1-2004/007398
- WO-A1-2005/068392
- WO-A1-2011/012125
- GB-A- 2 071 073
- US-A- 5 682 082
- US-A1- 2009 137 380
- RASMUSSEN J J ET AL: "Effect of Dopants on the Defect Structure of Single-Crystal Aluminium Oxide", JOURNAL OF THE AMERICAN CERAMIC SOCIETY, BLACKWELL PUBLISHING, MALDEN, MA, US, Bd. 53, Nr. 8, 1. November 1968 (1968-11-01), Seiten 436-440, XP002604549, ISSN: 0002-7820

## Beschreibung

Gegenstand der vorliegenden Erfindung sind Bauteile aus transparenten Korundkeramiken, deren Herstellung und Verwendung.

Transparente Keramiken sind in einer Vielzahl von Anwendungen einsetzbar, aus hohen Einsatztemperaturen und hohen Härten resultieren Vorzüge gegenüber Glaswerkstoffen. So finden transparente Keramiken gegenwärtig Anwendung in der Optik (z.B. als Schutzeinhausung von Laseranlagen, als verschleißfeste Scheibe in der Optik) und als Schutzscheibe für militärische Fahrzeuge, die aus einem System aus transparenten Werkstoffen besteht. Einkristallines (Saphir) und polykristallines (Korund) Aluminiumoxid ist eine Keramik mit einer extremen Härte. Die Kombination von ausgezeichnetem Widerstand gegenüber harten Materialien (z.B. Mineralien) und hoher Druck- und exzellenter Biegefestigkeit sowie moderater Bruchzähigkeit machen es zu einer idealen Materiallösung für bruchfeste Optiken.

Die Transparenz von Keramiken wird vordergründig über den Brechungsindex des Materials und die Fehlerfreiheit der Bauteile bestimmt. Der Brechungsindex n des Materials bestimmt durch Oberflächenreflexionen den theoretischen Transparenzgrad T₀, der in realen Bauteilen gemindert wird durch Lichtabsorption und Lichtstreuung. Der theoretische Transparenzgrad liegt für Keramiken bei 85 - 87 %. Für Korund ergibt sich ein theoretischer Transparenzgrad von T₀ = 85,7 % (mit n_{λ = 600nm} = 1,76). Um den theoretischen Transparenzgrad zu erreichen, ist ein ideal hergestelltes, d.h. porenfreies Gefüge (Porosität < 100 ppm), und eine phasenreine Zusammensetzung (Reinheit > 99,9 %, besser 99,99 %) gefordert.

Die mechanischen Eigenschaften von polykristallinem Submikron-Korund (α-Al₂O₃) mit Kristallgrößen < 500 nm sind allen transparenten kubischen Keramiken wie z.B. Magnesium-Aluminium-Spinell, Aluminiumoxynitrid und Yttrium-Aluminium-Granat überlegen. Härten bis zu 2.200 HV 10, Biegefestigkeiten von 700 - 1.000 MPa, ein E-Modul > 400 GPa und Bruchzähigkeiten bis zu 4 MPa√m sind realisierbar. Die Anwendung als transparenter Werkstoff ist durch das optische-anisotrope Kristallsystem und resultierender Doppelbrechung der Lichtwellen derzeit begrenzt, da sich keine ausreichenden Transparenzgrade > 65 % realisieren lassen.

Eine hohe Transparenz > 65 % von Korundbauteilen lässt sich lediglich realisieren, wenn die Kristallgröße unter der Lichtwellenwellenlänge (380 - 480 nm) bleibt. Eine technische Realisierung von solchen Werkstoffen ist über feinste Ausgangspulver mit Primärpartikelgrößen < 150 nm, besser < 80 nm und idealerweise < 50 nm möglich. Dotierungen mit einem Fremdstoff bis zu 1500 ppm (bevorzugt Magnesiumoxid bis 500 ppm) sind als Kornwachstumshemmer bekannt. Darüber hinaus kann eine Ausrichtung der Körner zu einer erhöhten Transparenz führen

Die Transparenz von Keramiken wird üblicherweise über die Real-Inline-Transmission (RIT) angegeben. Dabei durchleuchtet Licht (i.d.R. monochromatisch) eine Probe, ein Detektor erfasst nur gestreutes Licht mit einem geringen Aperturwinkel von maximal 0,5°. Diese Messgröße ist zurzeit ein Standardwert, um zuverlässige Aussagen zur Transparenz von optischen Komponenten treffen zu können.

Trübungen von transparenten Komponenten werden durch das menschliche Auge registriert und nur begrenzt über die RIT abgebildet. Trübe Bereiche vermindern die Qualität von hochwertigen Display-Komponenten (z.B. Smartphones, Tablets, Uhrendeckgläsern, kratzfestes Sensorscheiben). Eine Maßzahl für die Weißtrübung ist der Haze, der sehr sensibel Streulicht berücksichtigt. In Display-Komponenten und optischen Anwendungen ist ein niedriger Haze essentiell. Die Kenngröße "Haze" ist bislang in Zusammenhang mit transparenten Keramiken nicht berücksichtigt worden.

Lichtwellen werden bei Phasenübergängen durch abweichende Brechungsindizes in unterschiedliche Richtungen gebeugt, was durch eine Lichtwellenablenkung zu einem Transparenzverlust führt. Für eine hohe Transparenz sind Fremdphasen zu vermeiden bzw. der Fremdphasengehalt so gering wie nur möglich einzustellen. Bei den nicht-kubischen und optisch-anisotropen Korundkristallen werden die Lichtwellen zusätzlich an den Korngrenzen gebeugt, da der Brechungsindex richtungsabhängig ist (Δn= 0,008). Die Transparenzverluste können vermindert werden, wenn die Kristallgröße kleiner als die jeweilige Wellenlichtlänge ist, z.B. sind für eine hohe Transparenz im visuellen Lichtspektrum (380 - 780 nm) Körner mit einem Durchmesser kleiner 380 nm gefordert. Im Besonderen sind reine Korngrenzen ohne Fremdelemente notwendig.

Trotz bekannter Dotierungsstrategien ist es bislang nicht gelungen, transparente Korund-Keramiken mit hohem Transparenzgrad (RIT > 65 %) ohne Dopanden herzustellen, da Kornwachstum bei hohen Konsolidierungstemperaturen eintritt. In WO2004/007398 A1 und US 7396792 B2 ist ein transparentes polykristallines Korund beschrieben, das sich mit Transparenzwerten von RIT ≥ 30 % herstellen lässt, in dem Kornwachstum durch Dotierung mit MgO (≤ 0,3 Gew.-%) und ZrO₂ (0,1 - 0,5 Gew.-%) begrenzt wird. Die Dicke der Korund-Komponente liegt bei 0,8 mm. Andere Dotierungsmittel sind Metall-Fluor-Verbindungen, die einem hochreinen Korundpulver (Verunreinigungen < 100 ppm) bis zu 2.000 ppm zugemischt werden (WO2011/012125 A1 und DE 102009035501 A1). Damit lassen sich hochdichte und feinkristalline Korundkeramiken (mittlere Gefügekorngröße d50 < 500 nm) erzeugen. Transparente Bauteile werden in dieser Schrift nicht beschrieben.

GB2 071 073 befasst sich mit optisch transparenten Aluminiumoxid-Keramiken. Rasmussen JJ et al. JACS 53, 1968, S 436-440 beschreibt die Effekte von Dotierungsmitteln auf die Defektstruktur von Aluminiumoxid-Einkristallen.

US 5 682 082 A und WO 2004/007397 befassen sich mit dotierten transparenten polykristallinen Aluminiumoxid-Keramiken zur Verwendung in Natriumdampf-Hochdrucklampen. EP0 657 399 A1 befasst sich ebenfalls mit der Verwendung dotierter, transparenter Keramiken in Hochdruck-Gasentladungslampen.

WO 2005/068392 zeigt Korundmaterialien, die sich aufgrund ihrer optischen Eigenschaften, die durch Dotierung hervorgerufen werden, zur Imitation farbiger Korundedelsteine (Rubine, Saphire) eignen.

US 2009/137380 A1 beschreibt dotierte Aluminiumoxid-Keramiken, die gegenüber infraroter Strahlung resistent und transparent sind.

Die Aufgabe der vorliegenden Erfindung war die Herstellung und Fertigung von Bauteilen aus Korundkeramiken, sowie ein Verfahren zur Herstellung der Bauteile.

Diese Aufgabe konnte durch das Bauteil aus transparenter Korundkeramik nach Anspruch 1 gelöst werden. Bevorzugte Ausführungsformen sind in den Unteransprüchen angegeben. Die vorliegende Erfindung betrifft zudem ein Laminat umfassend das erfindungsgemäße Bauteil und ein Verfahren zur Herstellung des Bauteils. Die Aufgabe wird weiterhin durch die Verfahren gemäß der unabhängigen Ansprüche 11, 12 oder 13 gelöst.

Korundkeramiken weisen einen hohen Transparenzgrad auf, wenn das Korund-Ausgangspulver hochrein mit > 99,9 % und nur gering dotiert (< 2000 ppm, besser < 1000 ppm) vorliegt.

Die Dotierungsstrategie ist allerdings eine entscheidende Stellgröße für geringe Kristallgrößen, die für eine hohe Transparenz und einen niedrigen Haze wichtig ist. Dabei ist eine Mehrfach-Dotierung, d.h. eine Kombination der Dopanten Magnesiumoxid, Yttriumoxid und Lanthanoxid oder weiterer Oxide, vorzugsweise eine Kombination von zwei, drei, vier oder fünf Dopanten (Oxiden) oder eine Einfachdotierung mit einem der genannten Oxide möglich. Durch die Mehrfachdotierung lässt sich die Korngröße um mehr als 40 %, bevorzugt sogar mehr als 65 % gegenüber einer undotierten Keramik mindern.

Es ist vorteilhaft für die Bauteile aus transparenter Korundkeramik wenn diese einen Haze < 10 %, bevorzugt < 6 % und besonders bevorzugt < 3 % aufweisen. Unter Berücksichtigung einer porenfreien Keramik soll die Korngröße unter 750 nm, bevorzugt unter 500 nm, besonders bevorzugt unter 250 nm liegen, um einen entsprechenden Haze zu erzeugen.

Bei der Herstellung des Bauteils aus transparenter Korundkeramik können verschiedene Verfahren gemäß der Ansprüche 11, 12 oder 13 verwendet werden, die auf eine niedrige Korngröße im vollständig verdichteten Bauteil mit einer Porosität < 100 ppm bzw. 0,01% abzielen.

Das Korundpulver bzw. die Pulvermischung wird beispielsweise gemäß Anspruch 11 mit einer geeigneten Organik versetzt und granuliert werden. Die Formgebung erfolgt danach bevorzugt über ein- oder zweistufiges Trockenpressen, bestehend aus einem uniaxialen Pressen oder aus einem kombinierten Verfahren aus uniaxialem Pressen und nachgeschaltetem kaltisostatischen Pressen. Wird das Verfahren durch ein zyklisches Pressen mit bis zu 250 Zyklen an Pressvorgängen unterstützt, lassen sich Keramiken mit einer hohen Gründichte und hohem Homogenitätsgrad erzeugen.

In einem anderen Verfahren gemäß Anspruch 12 kann ein feines Korundpulver mittels Schnellsinterverfahren, dem feldunterstützten Sintern verdichtet werden. Hohe Heizraten und kurze Prozesszeiten unterdrücken dabei ein transparenzschädliches Kornwachstum.

In einem weiteren Verfahren gemäß Anspruch 13 werden die optisch anisotropen Korundkörner prozesstechnisch ausgerichtet. Es resultiert eine texturierte Keramik, die eine gesteigerte Transparenz gegenüber einer Keramik mit statistisch verteilten Körnern aufweist. Diese Texturierung wird durch Anwendung starker magnetischer Felder > 5 Tesla, besser > 8 Tesla erreicht. Dazu sind stabile, d.h. sedimentationsarme und agglomerationsarme keramische Suspensionen aus Korundpulver mit Primärpartikeln < 150 nm, besser < 50 nm nötig. Ein besonders positiver Effekt entsteht durch Kombination mit dem Gel-Casting-Verfahren. Damit ist diese Variante besonders geeignet, transparente Keramik mit einem RIT > 65 % und einem Haze < 10 % zu erzeugen (US20110039685 A1).

Der Eigenschaften der Bauteile, die nach den genannten Verfahren hergestellt wurde, kann verbessert werden wenn die eingesetzten Korundpulver eine Einfach- oder Mehrfachdotierung aufweisen, wodurch beispielsweise ein Haze < 6 % erzielt werden kann. Dies gilt für dünne Bauteile mit einer Dicke < 800 µm, bevorzugt < 500 µm, besonders bevorzugt < 250 µm und einem Dotierungsmittelgehalt von ≤ 2000 ppm (gesamte Menge der Dopanden).

Die Konsolidierung mit dem geforderten Verdichtungsgrad von mindestens 99,99 % kann zudem über ein zusätzlichen Vorsinterschritt unter definierter Atmosphäre (z.B. Luft, Sauerstoff, Inertgas) und Temperatur erfolgen. Insbesondere mit einem Verfahren, welches eine Kombination aus Vorsintern und Mehrfachdotierung umfasst, lassen sich besonders vorteilhafte Bauteile herstellen.

Der Kohlenstoff-Gehalt im verdichteten Bauteil kann zusätzlich dazu niedrig einstellt werden, wenn hohe Transparenz und niedriger Haze erreicht werden sollen. Der Kohlenstoff -Gehalt im verdichteten Bauteil kann prozesstechnisch durch ein HIP-Verfahren an technischer Luft eingestellt werden. Der tolerierbare C-Gehalt kann dabei auf < 0,2 %, bevorzugt < 0,05 % eingestellt werden. Aufgrund der hohen Materialhärte und -sprödigkeit konnte die Herstellung von dünnen Korund-Komponenten mit Dicken < 1 mm bislang nicht realisiert werden. Solche Bauteile werden im Rahmen dieser Erfindung als Wafer bezeichnet, die rund, quadratisch und rechteckig ausgeführt sein können. Die bevorzugte Methode für die Waferfertigung ist das Drahtsägen mit speziell diamantbestücktem Draht und optimierten Prozessflüssigkeiten. Eine weitere Ausführungsform der Waferfertigung ist das punktuelle Einbringen von Energie mittels Laser, die zu einer Materialschädigung und Materialzerrüttung in Dickenrichtung (z-Richtung) führt. Die Ablösung der Wafer erfolgt mechanisch, wobei das Verfahren mit oder ohne zusätzliche Temperatureinwirkung umgesetzt werden kann.

Nach der Waferfertigung sind Schleif- und Polierverfahren nötig, um die finale Oberflächengüte und die optischen Eigenschaften zu erreichen. Dabei sind geeignete Verfahren zu nutzen, die sich im Besonderen durch die Auswahl eines optimalen Kühlschmiermittel und einer Abfolge von Schleif- und Poliervorgängen mit definierten Körnungen auszeichnen.

Es ist überraschenderweise möglich, Komponenten mit einer RIT > 65 % herzustellen. Erst dadurch werden Anwendungen in zahlreichen Marktfeldern wie Displays (z.B. Tauchcomputer, Handys, Tablets, Notepads, Uhren), Uhrendeckgläsern, kratzfesten Sensoren, Bodenleuchten, Maschinenfenstern, Kameralinsen etc. möglich. Dies gelingt durch eine Fertigung auf eine Bauteildicke < 800 µm, bevorzugt < 500 µm, besonders bevorzugt < 250 µm. Die mittleren Korngrößen D50 der Korundkeramik sind < 750 nm, bevorzugt < 500 nm, besonders bevorzugt < 350 nm. Es handelt sich hierbei üblicherweise um Gefügekorngrößen. Diese werden mittels Linienschnittverfahren bestimmt.

Keramik ist Kunststoffen und Gläsern mit wesentlich höheren Druckfestigkeiten und Härten überlegen und ist deswegen wesentlich verschleißbeständiger gegenüber harten Partikeln wie z.B. Sandkörnern, natürlichen Gesteinen (Granit etc.) und Glasbruchstücken. Eine monolithische Ausführung der Keramik ist aufgrund des spröden Materialverhaltens nicht immer wünschenswert.

Eine Verbundbauweise aus Substratwerkstoff (z.B. Kunststoff, Glas) und harter keramischer Schicht verbindet beide Werkstoffe idealerweise. Das gefügte Bauteil wird als Laminat bezeichnet, die Verbindung erfolgt durch Anwendung von Druck und Temperatur, Verkleben mit einem organischen oder anorganischen Klebstoff und zwischenschichtfreies Fügen unter Ausbildung von hohen Adhäsionskräften.

Erfindungsgemäß umfasst ein Laminat eine Schicht aus dem erfindungsgemäßen Bauteil aus transparenter Korundkeramik und mindestens eine weitere Schicht aus einem Substratwerkstoff. Neben dem Bauteil aus transparenter Korundkeramik können aber auch mehrere Schichten aus einem Substratwerkstoff vorliegen, wobei die Substratwerkstoffe der verschiedenen Schichten gleich oder verschieden voneinander sein können.

Überraschenderweise hat sich hier gezeigt, dass mit Dicken des Bauteils aus transparenter Korundkeramik von < 500 µm, bevorzugt < 300 µm, besonders bevorzugt < 200 µm in Kombination mit einem Substratwerkstoff, bevorzugt chemisch gehärtetes Glas, als Laminat extrem gute Ergebnisse im Drop-Test auf harten Untergrund ergeben.

Handelsübliche Gläser weisen geringere Bruchzähigkeiten (< 100 MPa) und Biegefestigkeiten (< 1 MPa√m) auf und sind nicht besonders gut für Displayanwendungen geeignet. Neuartige Gläser können in oberflächennahen Bereichen (> 50 µm) durch lonenaustausch von Lithium-Aluminosilikat-Gläsern unter Druck gesetzt werden. Die induzierten Druckspannungen liegen bei mindestens 600 MPa (DE 102010009584 A1). Dadurch steigt der Widerstand gegenüber Zugspannungen. Nachteilig an diesen Gläsern ist die verminderte Kratz- und Druckbeständigkeit infolge niedriger Werkstoffhärte. Ein Laminat aus beispielsweise gehärtetem Glas und dünner Korundkeramik ist eine Kombination, die Vorteile hinsichtlich tolerierbarer Displayfallhöhe und Kratzbeständigkeit der Displays aufweist. Im Vergleich zu herkömmlichen Laminaten ohne transparente Keramik konnte die maximal mögliche Fallhöhe bis es zum Bruch kommt um mindestens 80% gesteigert werden.

Die Bauteile aus transparenter Korundkeramik können mit hohen lateralen Abmessungen bis zu 400 mm gefertigt werden. Die Bauteile aus transparenter Korundkeramik können außerdem ein bestimmtes Aspektverhältnis aufweisen. Im Rahmen dieser Erfindung wird unter dem Aspektverhältnis das maximale Verhältnis von Länge zu Breite der Komponente verstanden. Rechteckige Bauteile mit einem Aspektverhältnis kleiner als 5 können realisiert werden. Daraus ergibt sich ein bevorzugtes Aspektverhältnis des Bauteils aus transparenter Korundkeramik im Bereich von 1 (quadratisch) bis 5 (rechteckig). Die Bauteile aus transparenter Korundkeramik können aber auch als runde Scheiben mit einem Durchmesser von bis zu 400 mm vorliegen.

## Patentansprüche

1. Bauteil aus transparenter Korundkeramik, **dadurch gekennzeichnet, dass** die Keramik einfach- oder mehrfachdotiert ist, die Gesamtmenge an Dotierungsmittel ≤ 2000 ppm ist, wobei die Dopanden ausgewählt werden aus einer Liste umfassend Magnesiumoxid, Yttriumoxid und Lanthanoxid, und wobei die mittleren Korngrößen D₅₀ der Korundkeramik < 750 nm beträgt und das Bauteil eine Dicke von < 800 µm und eine Porosität < 0,01% aufweist.

2. Bauteil nach Anspruch 1 oder 2, **dadurch gekennzeichnet, dass** das Bauteil einen Haze < 10 %, bevorzugt < 6 % und besonders bevorzugt < 3 % aufweist.

3. Bauteil nach einem der vorstehenden Ansprüche, **dadurch gekennzeichnet, dass** das Bauteil eine Dicke von < 500 µm, bevorzugt < 250 µm aufweist.

4. Bauteil nach einem der vorstehenden Ansprüche, wobei eine Mehrfachdotierung vorliegt.

5. Bauteil nach Anspruch 4, wobei eine Kombination von zwei, drei, vier oder fünf Dopanden vorliegt.

6. Bauteil nach einem der vorstehenden Ansprüche, **dadurch gekennzeichnet, dass** die mittleren Korngrößen D₅₀ der Korundkeramik bevorzugt < 500 nm, besonders bevorzugt < 350 nm ist.

7. Bauteil nach einem der vorstehenden Ansprüchen, **dadurch gekennzeichnet, dass** der C-Gehalt < 0,2 % beträgt.

8. Laminat, umfassend eine Schicht aus einem Bauteil nach einem der Ansprüche 1 bis 7 und mindestens eine weitere Schicht aus einem Substratwerkstoff.

9. Laminat nach Anspruch 8, wobei das Bauteil eine Dicke von < 500 µm, bevorzugt < 300 µm, besonders bevorzugt < 200 µm aufweist

10. Laminat nach einem der Ansprüche 8 oder 9, wobei der Substratwerkstoff chemisch gehärtetes Glas ist.

11. Verfahren zur Herstellung eines Bauteils aus transparenter Korundkeramik nach einem der Ansprüche 1 bis 7, **dadurch gekennzeichnet, dass** das Verfahren folgende Verfahrensschritte umfasst:
a) Bereitstellen des mit einer geeigneten Organik versetzten und granulierten Korund-Ausgangspulvers, wobei das Korund-Ausgangspulver eine Reinheit von > 99,9% und eine Dotierung ≤ 2000 ppm aufweist,
b) Formgebung durch zyklisches Pressen mit einer Vielzahl von Pressvorgängen, bevorzugt bis zu 250 Zyklen.

12. Verfahren zur Herstellung eines Bauteils aus transparenter Korundkeramik nach einem der Ansprüche 1 bis 7, **dadurch gekennzeichnet, dass** das Verfahren folgende Verfahrensschritte umfasst:
a) Bereitstellen des feinen Korund-Ausgangspulvers, wobei das Korund-Ausgangspulver eine Reinheit von > 99,9% und eine Dotierung ≤ 2000 ppm aufweist,
b) Feldunterstützes Schnellsintern.

13. Verfahren zur Herstellung eines Bauteils aus transparenter Korundkeramik nach einem der Ansprüche 1 bis 7, **dadurch gekennzeichnet, dass** das Verfahren folgende Verfahrensschritte umfasst:
a) Bereitstellen einer Suspension aus dem Korundpulver mit Primärpartikeln < 150 nm, wobei das Korund-Ausgangspulver eine Reinheit von > 99,9% und eine Dotierung ≤ 2000 ppm aufweist,
b) Ausrichten der Körner des Korundpulvers in einem Magnetfeld der Stärke > 5 Tesla.

14. Verfahren nach einem der Ansprüche 11 bis 13, wobei der Kohlenstoffgehalt mittels HIP-Verfahren an technischer Luft eingestellt wird.

15. Verwendung des Laminats nach einem der Ansprüche 8 bis 10 für Displays von Tauchcomputern, Handys, Tablets, Notepads oder Uhren, Uhrendeckgläsern, kratzfesten Sensoren, Bodenleuchten, Maschinenfenstern oder Kameralinsen.

## Claims

1. Component made of transparent corundum ceramic material, **characterized in that** the ceramic material is doped once or multiple times, the total amount of doping agent is ≤ 2000 ppm, the dopants being selected from a list comprising magnesium oxide, yttrium oxide and lanthanum oxide, and the mean grain sizes D₅₀ of the corundum ceramic material being <750 nm and the component having a thickness of <800 µm and a porosity of <0.01%.

2. Component according to either claim 1 or claim 2, **characterized in that** the component has a haze of <10%, preferably <6% and particularly preferably <3%.

3. Component according to either of the preceding claims, **characterized in that** the component has a thickness of <500 µm, preferably <250 µm.

4. Component according to any of the preceding claims, wherein there is multiple doping.

5. Component according to claim 4, wherein a combination of two, three, four or five dopants is present.

6. Component according to any of the preceding claims, **characterized in that** the average grain size D₅₀ of the corundum ceramic material is preferably <500 nm, particularly preferably <350 nm.

7. Component according to any of the preceding claims, **characterized in that** the C-content is <0.2%.

8. Laminate, comprising a layer consisting of a component according to any of claims 1 to 7 and at least one further layer consisting of a substrate material.

9. Laminate according to claim 8, wherein the component has a thickness of <500 µm, preferably <300 µm, particularly preferably <200 µm.

10. Laminate according to either claim 8 or claim 9, wherein the substrate material is chemically toughened glass.

11. Method for producing a component made of transparent corundum ceramic material according to any of claims 1 to 7, **characterized in that** the method comprises the following method steps:
a) providing the corundum starting powder which is mixed and granulated with a suitable organic material, the corundum starting powder having a purity of >99.9% and a doping of ≤ 2000 ppm,
b) shaping by means of cyclic pressing using a large number of pressing processes, preferably up to 250 cycles.

12. Method for producing a component made of transparent corundum ceramic material according to any of claims 1 to 7, **characterized in that** the method comprises the following method steps:
a) providing the fine corundum starting powder, the corundum starting powder having a purity of >99.9% and a doping of ≤ 2000 ppm,
b) field-assisted rapid sintering.

13. Method for producing a component made of transparent corundum ceramic material according to any of claims 1 to 7, **characterized in that** the method comprises the following method steps:
a) providing a suspension from the corundum powder having primary particles <150 nm, the corundum starting powder having a purity of >99.9% and a doping of ≤ 2000 ppm,
b) orienting the grains of the corundum powder in a magnetic field of strength >5 Tesla.

14. Method according to any of claims 11 to 13, wherein the carbon content is adjusted by means of a HIP process in technical air.

15. Use of the laminate according to any of claims 8 to 10 for displays of dive computers, mobile phones, tablets, notepads or watches, watch covers, scratch-resistant sensors, floor lights, machine windows or camera lenses.

## Revendications

1. Pièce en céramique-corindon transparente, **caractérisée en ce que** la céramique présente un dopage simple ou multiple, **en ce que** la quantité totale de dopant est ≤ 2000 ppm, les dopants étant choisis dans une liste comprenant l'oxyde de magnésium, l'oxyde d'yttrium et l'oxyde de lanthane, et les tailles moyennes des grains D₅₀ de la céramique-corindon étant < 750 nm et la pièce ayant une épaisseur < 800 µm et une porosité < 0,01 %.

2. Pièce selon la revendication 1 ou 2, **caractérisée en ce qu'**elle présente un trouble < 10 %, de préférence < 6 % et de manière particulièrement préférée < 3 %.

3. Pièce selon l'une des revendications précédentes, **caractérisée en ce qu'**elle présente une épaisseur < 500 µm, de préférence < 250 µm.

4. Pièce selon l'une des revendications précédentes, laquelle pièce présente un dopage multiple.

5. Pièce selon la revendication 4, dans laquelle une combinaison de deux, trois, quatre ou cinq dopants est présente.

6. Pièce selon l'une des revendications précédentes, **caractérisée en ce que** les tailles moyennes des grains D₅₀ de la céramique-corindon est de préférence < 500 nm, de manière particulièrement préférée < 350 nm.

7. Pièce selon l'une des revendications précédentes, **caractérisée en ce que** la teneur en C est < 0,2 %.

8. Stratifié comprenant une couche constituée d'une pièce selon l'une des revendications 1 à 7, et au moins une autre couche constituée d'un matériau de substrat.

9. Stratifié selon la revendication 8, dans lequel la pièce présente une épaisseur < 500 µm, de préférence < 300 µm, de manière particulièrement préférée < 200 µm

10. Stratifié selon l'une des revendications 8 ou 9, dans lequel le matériau de substrat est du verre durci chimiquement.

11. Procédé de fabrication d'une pièce en céramique-corindon transparente selon l'une des revendications 1 à 7, **caractérisé en ce qu'**il comprend les étapes suivantes :
a) fourniture de la poudre de corindon granulée de départ à laquelle un produit organique approprié a été ajouté, la poudre de corindon de départ présentant une pureté > 99,9 % et un dopage ≤ 2 000 ppm,
b) formage par pressage cyclique à l'aide d'une pluralité d'opérations de pressage, de préférence jusqu'à 250 cycles.

12. Procédé de fabrication d'une pièce en céramique-corindon transparente selon l'une des revendications 1 à 7, **caractérisé en ce qu'**il comprend les étapes suivantes :
a) fourniture de la poudre de corindon fine de départ, la poudre de corindon de départ présentant une pureté > 99,9 % et un dopage ≤ 2 000 ppm,
b) frittage rapide assisté par champ.

13. Procédé de fabrication d'une pièce en céramique-corindon transparente selon l'une des revendications 1 à 7, **caractérisé en ce qu'**il comprend les étapes suivantes :
a) fourniture d'une suspension de la poudre de corindon comportant des particules primaires < 150 nm, la poudre de corindon de départ présentant une pureté > 99,9 % et un dopage ≤ 2 000 ppm,
b) orientation des grains de la poudre de corindon dans un champ magnétique d'intensité > 5 Tesla.

14. Procédé selon l'une des revendications 11 à 13, dans lequel la teneur en carbone est ajustée à l'air technique au moyen du procédé HIP.

15. Utilisation du stratifié selon l'une des revendications 8 à 10 pour les écrans d'ordinateurs de plongée, les téléphones portables, les tablettes, les blocs-notes ou les montres, les verres de protection de montres, les capteurs résistants aux rayures, les lampadaires, les vitres de machines ou les objectifs d'appareils photo.
